# EUROPEAN PATENT APPLICATION

(11) **EP 2 107 465 A1**
(43) Date of publication of application: **07.10.2009**
(21) Application number: 08290327.9
(22) Date of filing: 03.04.2008
(51) Int. Cl.: G06F 9/50

(54) **Method of providing a service**

(71) Applicant: Alcatel Lucent, 75008 Paris (FR)
(72) Inventor: Jürgen Sienel, 71220 Leonberg (DE); Marc Drewniok, 73728 Esslinge (DE)
(74) Representative: LOUIS, PÖHLAU, LOHRENTZ

(57) **Abstract**

The invention concerns a method of providing a service, and a service control unit (2) to execute said method. The service is provided by means of a service composition comprising two or more inter-linked service building components (1, 31, 32, 41, 51, 52) executed on a data processing platform. The two or more inter-linked service building components (1, 31, 32, 41, 51, 52) are provided whereby at least one service building component of the two or more inter-linked service building components (1, 31, 32, 41, 51, 52) comprises a service routing table (13) with service routing rules specifying one or more service building components of the two or more inter-linked service building components (1, 31, 32, 41, 51, 52) to be invoked by the at least one service building component dependent on a service to be provided and dependent on an event. The at least one service building component receives a service identifier defining the service to be provided and a notification of an event. The at least one service building component identifies the service routing rules corresponding to the received service identifier and the notified event according to the service routing table (13). The at least one service building component invokes the one or more service building components specified by the identified service routing rules.

## Description

The present invention relates to a method of providing a service on a data processing platform, and a service control unit to execute said method.

Service oriented architecture offers means to represent a service logic as a service composition built from independent service building components, so-called service enablers, that can communicate through a defined interface as, e.g., defined by WSDL (= Web Services Description Language) and accessed by SOAP (cf. the web site http://www.w3.org/TR/soap of the World Wide Web Consortium W3C). Applications are built either by a fixed programming code (e.g., Java code) which integrates the different (external) web service (= WS) components into a composed service logic of the application, or by orchestration of the different WS components through a business process model that is, e.g., interpreted using a central BPEL engine (BPEL = Business Process Execution Language). The term "orchestration" describes the automated arrangement, co-ordination, and management of service building components.

For telecommunication applications, a different scalable event driven execution model has been developed (JSLEE = JAIN SLEE = Java API for Intelligent Networks/Service Logic Execution Environment; API = Application Programming Interface). JSLEE introduces services enablers and a centralised event router which manages all events that are posed by the service enabler and routes the events to potential subscribers. The service logic is implemented through spanning a (directed) tree from a root element (the service) through all service building components, known in JSLEE as service building blocks (= SBB), that are used in the service composition. The event router is a centralised element and each SBB needs to initiate a new instance in any composition it is belonging to.

The object of the present invention is an improved method of providing a service.

The object of the present invention is achieved by a method of providing a service by means of a service composition comprising two or more inter-linked service building components executed on a data processing platform, the method comprising the steps of providing the two or more inter-linked service building components whereby at least one service building component of the two or more inter-linked service building components comprises a service routing table with service routing rules specifying one or more service building components of the two or more inter-linked service building components to be invoked by the at least one service building component dependent on a service to be provided and/or dependent on an event, receiving, by the at least one service building component, a service identifier defining the service to be provided and/or a notification of an event, identifying, by the at least one service building component, the service routing rules corresponding to the received service identifier and/or the notified event according to the service routing table, and invoking, by the at least one service building component, the one or more service building components specified by the identified service routing rules. Furthermore, the object of the present invention is achieved by a service control unit for supporting the execution of two or more services on a data processing platform, the service control unit comprising two or more inter-linked service building components associated with two or more service compositions whereby at least one of the service building components comprises a service routing table with service routing rules specifying one or more service building components of the two or more inter-linked service building components to be invoked by the at least one service building component dependent on the service of the two or more services to be provided and/or dependent on an event, and adapted to receive a service identifier defining the service to be provided and/or a notification of an event, identify the service routing rules corresponding to the received service identifier and/or the notified event according to the service routing table, and invoke the one or more service building components specified by the identified service routing rules.

The invention allows a dynamic orchestration of service building components running in a distributed execution environment, providing a method which is flexible in a sense that the service logic can be dynamically changed. And the present invention supports an event driven orchestration which may be synchronous and/or asynchronous. The invention directly supports an event driven execution model that is often needed in telecommunication environments, contrary to the prior art where a BPEL engine is used. Thus, the present invention avoids disadvantages of the prior art where a fixed programming code is used.

The invention dispenses with centralised elements that may represent single points of failure and execution bottlenecks. Thus, the present invention avoids the disadvantages of the prior art where central elements are used.

Thus, the proposed new solution combines the best of both existing technologies, BPEL and JSLEE. On the one hand, the method according to the invention does not require a centralised entity for the service execution which has a positive impact on service scalability and stability (no singe point of failure), and on the other hand, the method according to the invention allows an adaptation of a routing in a highly flexible way and on demand in necessary situations.

The invention exploits the fact that most of the functional intelligence is already implemented in the service building components itself. Unlike the approaches used in the aforementioned prior art, BPEL and JSLEE, which add additional service logic for a composition of service building components, e.g. SBBs, either by building a dependency tree in the JSLEE or by the scripting approach of BPEL, the present invention distributes this composite service logic into each service building component.

The invention provides a fast processing of event-driven execution. Service building components, e.g., base services, can be developed independently of underlying container technologies. Moreover, the invention provides a single instance approach from a composition perspective. From every service building component, only a single instance has to be created. This instance can be re-used in different services. The easy re-configurability enabled by the invention leads to scalability, load-balancing and failure recovery.

The services to be provided by means of the present invention are data processing services provided in the IT context, e.g., services provided in telecommunications networks or computer networks (IT = Information Technology). According to the invention, a service is created once only and deployed on a platform once only. However, as soon as the service is deployed it may be re-used arbitrarily often.

The invention provides a valuable alternative solution because it combines the advantages of the telecommunication oriented world and the business IT oriented world. The invention may be realised as deployments in (IMS) application servers, and thus provide business advantage against prior art solutions (IMS = IP Multimedia Subsystem).

Further advantages are achieved by the embodiments of the invention indicated by the dependent claims.

According to a preferred embodiment of the invention, a service creator creates a service description describing said service. The service to be described may be a request-response driven service such as a currency conversion service or an event driven service such as a service for establishing a telephone connection. The service creator may be a service provider or a service user authorised to participate in a service creation and modification process of a service. The service description defines a service composition ID (= identifier/identification) for identification of the service composition. Moreover, the service description defines the two or more inter-linked service building components of the service composition.

Furthermore, the service description defines event-action links between said two or more service building components.

A service building component used inside a service composition is called an instance of the service building component. A service building component is identified by a unique name inside the data processing platform, and is specified by three sets: properties, actions, events.

A property is a variable. Each variable consists of a name (unique inside the service building component) and a value. Each instance of a service building component manages its own properties, keeping track of their values and updating them. The values of the properties of an instance of a service building component represent the state of the instance of the service building component.

An action is an operation that an instance of a service building component can perform when requested. The behaviour of an action can depend on the value of the value of the properties associated with the instance. After the invocation of an action, the instance of the service building component can throw/fire one or more events.

An event is a means an instance of a service building component can use to proactively communicate that something has happened, e.g., a change of state, an arrival of a message, etc. Each event is characterised by an event name which is unique inside the service composition. Events can be thrown/fired by an instance of a service building component after one of its actions has been invoked. The events thrown/fired by an instance of a service building component can trigger the invocation of an action on an instance of a (possibly different) service building component.

An event-action link of said event-action links specifies an event thrown/fired by a service building component and an action executed by a successive service building component, whereby said action is linked to said event, i.e., the action is triggered by the event. The term "successive" must be seen in the context of a set of inter-linked service building components which perform their functions in a specific sequence, thus comprising a successive service building component which performs after another service building component. It is also possible that a service building component is identical to its successive service building component, i.e., that an event thrown by a service building component triggers an action executed by the same service building component.

According to another preferred embodiment of the invention, the service description additionally defines one or more first events which initially appear in the service composition and one or more last events which are finally thrown by the service composition. A first event may be an event which is a trigger for the service to start, e.g., an incoming request or parameter or state information from a user of the service. A last event may be an event which represents a final output of the service, e.g., an outgoing response or result or state information which is sent to a user of the service.

According to another preferred embodiment of the invention, the service creator stores said service description in a service repository such as a memory unit.

The stored service description can be accessed in the service repository and may be modified at a later stage by the service creator.

In a preferred embodiment, a deployment manager deploys said service on a data processing platform such as a telecommunications network or a computer network. The deployment steps comprise that the deployment manager identifies the two or more inter-linked service building components according to said service description and instantiates the two or more inter-linked service building components, i.e. the deployment manager creates instances of the two or more inter-linked service building components. Said instantiation steps comprise the creation of the service routing table of the at least one service building component based on said service description. It is possible that this creation comprises the step of loading said service routing rules into the service routing table of the at least one instantiated service building component.

Preferably, the method comprises the step of deploying, by the deployment manager, two or more services on the data processing platform by instantiating a plurality of service building components wherein at least one of the service building components comprises service routing rules associated with the two or more services.

According to another preferred embodiment of the invention, at least one of said service building components exposes its functionality through a unique service building component description. The unique service building component description specifies one or more actions that can be triggered by the at least one service building component, and one or more events associated with the at least one service building component. Further, the unique service building component description specifies one or more parameters or input values that are used as input for said one or more actions and/or said one or more events. The service creator considers said exposed functionality when choosing the two or more inter-linked service building components for creation of the service composition from the two or more inter-linked service building components.

Preferably, each functional service building component exposes its functionality through a respective unique interface description. Each service building component exposes at least one functionality. The unique interface description includes one or more actions that can be triggered in the service building component. For instance, if the service building component provides the action "Send SMS", the service building component exposes the functions sendSMS, cancelSending, etc (SMS = Short Message Service). The unique interface description includes one or more events that may happen, for instance, SMS_SENT or SMS_FAILED. Furthermore, the unique interface description includes parameters that are used for one or more of the actions or events, e.g., a sender, a recipient, a text, a time of sending the SMS, a cause of error.

It is possible that this unique interface description constitutes a supplement to a known interface of a service building component, e.g., as defined by WSDL. The unique interface description simplifies a creation of a service composition from two or more service building components.

Preferably, an initial event invokes a first service building component of said service composition. The first service building component in turn invokes one or more successive service building components of the service composition according to the service routing rules stored in the service routing table of the first service building component. Each service building component decides, based on the incoming event/request and the service routing rules, which service building component is to be successively invoked. A last but one service building component of said service composition invokes a last service building component of said service composition. The last service building component triggers a final event, e.g., a final action or a final state or an outgoing result or parameter sent to a user of the service.

Upon invocation of a session of the service, preferably a session object assigned to the session is generated. Said session object comprises a service composition identifier for identifying said service composition, i.e. for identifying said service. Said session object is transmitted between the two or more inter-linked service building components. A service building component invoking a successive service building component sends the session object to the successive service building component. When the session of the service is finished, the session object is deleted. Triggered by a final event, the session object is destroyed and a service garbage collector is invoked. The service garbage collector terminates all session-specific actions in the service building components associated with the invoked session of the service.

The service building component is adapted to process concurrently a plurality of different sessions, either all associated with the same service or associated with different services. Each session is distinguished by means of a unique session object.

According to a preferred embodiment of the invention, a preceding service building component of the two or more inter-linked service building components copies internal state information associated with the preceding service building component to the session object. Said internal state information is sent together with the session object from the preceding service building component to a successive service building component of the two or more service building components invoked by the preceding service building component.

Alternatively, it is possible that said session object is centrally stored in a central storage unit. Instead of sending the session object from a preceding service building component to a successive service building component, a reference to the session object is sent from a preceding service building component to a successive service building component. A service building component uses the received reference to the session object for retrieving data associated with the session object.

The service control unit comprises the two or more inter-linked service building components whereby at least one of the service building components is adapted to receive a service identifier defining the service to be provided and/or a notification of an event, identify the service routing rules corresponding to the received service identifier and/or the notified event according to the service routing table, and invoke the one or more service building components specified by the identified service routing rules.

Preferably, the service control unit comprises a storage unit adapted to store at least one of the two or more inter-linked service building components.

These as well as further features and advantages of the invention will be better appreciated by reading the following description of preferred exemplary embodiments taken in conjunction with accompanying drawings of which
- Fig. 1: is a block diagram showing an embodiment of a service building component,

- Fig. 2a: is a block diagram of a server for providing a service according to an embodiment of the invention, and
- Fig. 2b: is a block diagram of a server for providing a service according to another embodiment of the invention.

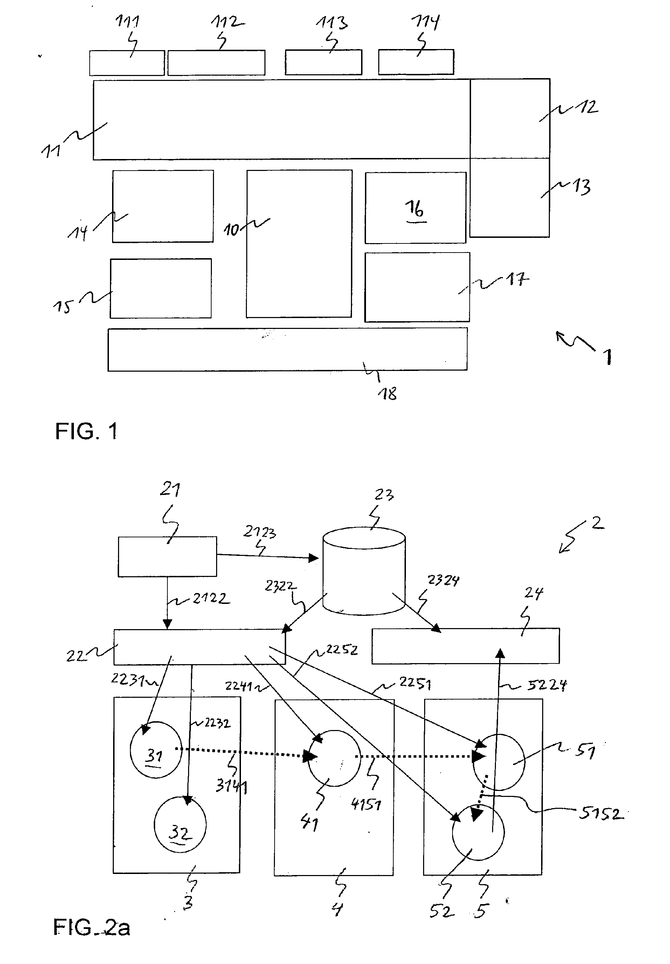

Fig. 1 shows a service building component 1 comprising a service building component function implementation 10, a component interface 11, a service router 12, a service routing table 13 for storing service routing rules, a session object storage 14 for storing one or more session objects, a pre-processing unit 15, an instance object storage 16, a post-processing unit 17, and a processing rules data base 18. The component interface 11 comprises an interface element 111 for web service calls, an event receiver 112, an interface element 113 for native calls, and other interface elements 114.

The service building component 1 may be created in programming code and realised as an instance of the programming code on a data processing platform. The service building component 1 is one of two or more inter-linked service building components building a service composition which is to be executed on the data processing platform in order to provide a service. The service is requested by a service requestor, e.g., a web browser or a telephone set.

A first request triggering the execution of the service may reach the service building component 1 directly from the service requestor, or from a portal for starting the service, or via a routing process.

Upon invocation of the service building component 1 through one of the interfaces 111 to 114, the service building component 1 receives a function call comprising an event triggering an associated action or an action request. If the service building component 1 is not the initial service building component of the service composition, this function call also comprises a session object associated with the service composition. The received session object comprises a service composition ID. First, the component interface 11 determines if the function call is valid and allowed in the current context. Then, the component interface 11 sends the session object to the session object storage 14 for storage of the session object in the session object storage 14. The component interface 11 then invokes the pre-processing unit 15 for processing rules corresponding to the received event/action request and the service composition ID. For example, the pre-processing unit 15 retrieves parameters from the session object and feeds the parameters into parameter fields of a function performing the requested action in the service building component function implementation 10.

Additional rules might modify values of session object fields, modify fields in an instance object, etc. This kind of rules may be quite similar to actions taken into a BPEL script in between two WS invocations.

After that, the component interface 11 performs a function call, i.e. invokes the requested action in the service building component function implementation 10. For the sake of simplicity, let us assume that the functional calls occurring in this example are asynchronous, i.e. event driven. In this case, the component interface 11 return to the service requestor with a OK, e.g., send an OK message to the service requestor. Thus, the service building component 1 performs its functionality. While performing its functionality, the service building component 1 generates or receives an event at a given time. Then, the service building component 1 wants to throw the event, e.g. send a message "SMS_SENT".

The event processing of this event is done by calling the service router 12 of the service building component 1 which is responsible to take care of actions that are relying on the event the service building component 1 wants to throw. The service router 12 will first look in the service routing table 13 with the composition ID taken from the session object corresponding to the currently active session. If there exist at least on entry in the service routing table 13, the service building component 1 triggers the post-processing unit 17 to perform post-processing rules that relate to this event and the composition ID. At least, the service building component 1 will copy output parameters from the actions that are relying on the event or from the instance object storage 16 to the session object. This kind of rules may be quite similar to actions taken into a BPEL script in between two WS invocations. The pre-processing rules and the post-processing rules are disjoint.

Then, the service building component 1 invokes one or more successive service building components as specified in an entry of the service routing table 13 corresponding to the event and the composition ID. The entry of the service routing table 13 may additionally be dependent on a used method (WS, event, etc.). The service building component 1 invokes the one or more successive service building components by invoking the component interfaces of the respective service building components.

A routing table entry of the service routing table 13 may consist of a composition ID, an event, a next action endpoint and optionally the call methodology if more than a single methodology (e.g. web services) is used on the data processing platform, e.g., the computer network.

Some specific actions need to be executed for initial events and final events. Initial events are the first events that appear in a service composition. Since prior to the first event no session object exists, additionally a new session object has to be created. After creation of the session object, the session object has to be filled with values. This can be done either by specific post-processing rules or a separate fillSessionObject method.

Final events destroy the session object and invoke a service garbage collector which terminates all session specific actions in each service building component relating to the service composition. Initial and final events have specific markers in the service routing table 13 of a service building component they belong to.

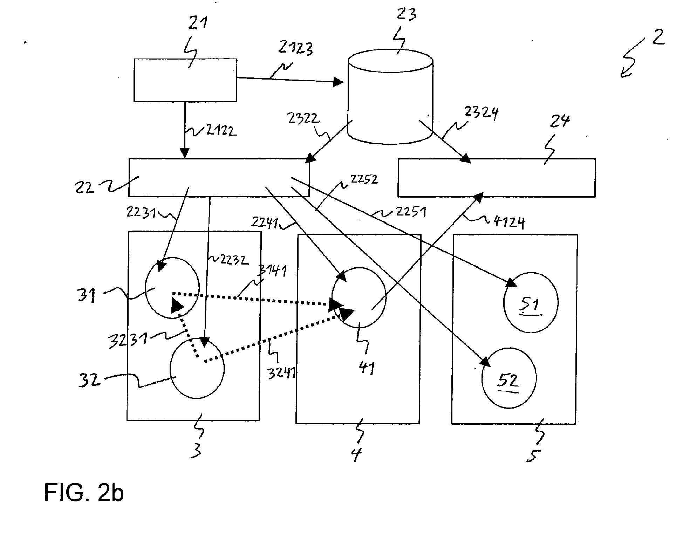

Figs. 2a and 2b show a service control unit 2 for providing two or more services on a data processing platform. The service control unit 2 comprises a service creator 21, a deployment manager 22, a service description storage 23, a service garbage collector 24, and one or more containers 3, 4, 5 used as repositories of service building components. A first container 3 contains two service building components 31, 32 associated with a first methodology, e.g., components to be executed on a Java platform (JSLEE; J2EE = Java Platform Enterprise Edition). A second container 4 contains a service building component 41 associated with a second methodology, e.g., components to be executed on another platform such as .NET®. A third container 5 contains two service building components 51, 52 associated with a third methodology, e.g., web services. It is also possible that each container 3, 4, 5 containing service building components of a separate methodology is associated with a separate service control unit.

The service control unit 2 may be composed of one or several inter-linked computers, i.e., a hardware platform, a software platform basing on the hardware platform, and several application programs executed by the system platform formed by the software and hardware platform. The functionality of the service control unit 2 is provided by the execution of these application programs. The application programs or a selected part of these application programs constitute a computer software product providing one or more services as described in the following, when executed on the system platform. Further, such computer software product is constituted by a storage medium storing these application programs or said selected part of application programs. It is possible that the service control unit 2 is at least a part of a service execution environment for providing a service.

Preferably, at least a part of the functions of the service control unit 2 are provided by a processing unit of the service control unit 2. It is possible that at least a part of the service control unit 2 is implemented in a telecommunication server deployed in a telecommunications network or a computer server deployed in a computer network.

A service is defined by a service description. The service description contains at least one unique composition ID. Furthermore, the service description describes a set of service building components belonging to a service composition representing the service and connections between two service building components of the set of service building components. For example, the connections are defined by an event of a first service building component and an action of a second (= successive) service building component whereby the action is associated with the event. For example, an event thrown/fired by the first service building component triggers an action of the second service building component. Preferably, the service description also describes a set of rules for a pre-processing and/or a post-processing of each event and/or action of a service building component. The set of rules for a pre-processing and/or a post-processing comprises at least values to fill the parameters of the actions. Preferably, the service description also describes one or more initial events and one or more final events.

This service description, preferably in XML, is constructed by the service creator 21 and preferably sent 2123 to a service description storage 23 where the service description is stored (XML = Extensible Markup Language). Preferably, the service description storage 23 allows later modification of the orchestration. The service creator 21 also sends 2122 instructions and data about the service to the deployment manager 22. Then, the service description is passed 2322 from the service description storage 23 to the deployment manager 22 which invokes 2231, 2232, 2241, 2251, 2252 the component interface in one or more of the service building components 31, 32, 41, 51, 52, according to the service description.

This invocation 2231, 2232, 2241, 2251, 2252 comprises loading the event/action connections into service routing tables of the service building components. This invocation may also comprise adding pre-processing rules and/or post processing rules to a processing rules data base 18 of the service building components. This invocation may also comprise marking the one or more final events of the final service building component. As a last step, the invocation also comprises adding the one or more initial events to the service routing table 13 of the initial service building component. This step is performed as last step in order to avoid sessions to be started before deployment is completed.

Fig. 2a shows the execution of a first service provided by the service control unit 2. The first service is defined by a first service description stored in the service description storage 23. The deployment manager 22 instantiates the first service by invoking a specific inter-linked subset 31, 41, 51, 52 of the service building components.

The initial service building component 31 of the first service composition instantiating said first service receives a service identifier defining the first service to be provided and a notification of an event, thus initiating a new session of the first service. The initial service building component 31 creates a session object associated to the new session. The initial service building component 31 performs its functionality (one or more actions associated with the notified event) and throws an event. The initial service building component 31 comprises a service routing table with service routing rules specifying one or more service building components of the inter-linked service building components 31, 41, 51, 52 to be invoked by the initial service building component 31 dependent on the service to be provided and dependent on an event.

The initial service building component 31 identifies the service routing rules corresponding to the received service identifier and the notified event according to its service routing table. The initial service building component 31 invokes 3141, as specified by the identified service routing rules, the service building component 41, representing the second service building component in the currently executed first service composition.

The second service building component 41 of the first service composition receives 3141 the session object from the initial service building component 31 and a notification of the event thrown by the initial service building component 31. The second service building component 41 performs its functionality (one or more actions associated with the notified event) and throws an event. The second service building component 41 comprises a service routing table with service routing rules specifying one or more service building components of the inter-linked service building components 31, 41, 51, 52 to be invoked by the second service building component 41 dependent on the service to be provided and dependent on the notified event.

The second service building component 41 identifies the service routing rules corresponding to the received service identifier and the notified event according to its service routing table. The second service building component 41 invokes 4151, as specified by the identified service routing rules, the service building component 51, representing the last but one service building component in the currently executed first service composition.

The last but one service building component 51 of the first service composition receives 4151 the session object from the second service building component 41 and a notification of the event thrown by the second service building component 41. The last but one service building component 51 performs its functionality (one or more actions associated with the notified event) and throws an event. The last but one service building component 51 comprises a service routing table with service routing rules specifying one or more service building components of the inter-linked service building components 31, 41, 51, 52 to be invoked by the last but one service building component 51 dependent on the service to be provided and dependent on the notified event.

The last but one service building component 51 identifies the service routing rules corresponding to the received service identifier and the notified event according to its service routing table. The last but one service building component 51 invokes 5152, as specified by the identified service routing rules, the service building component 52, representing the last service building component in the currently executed first service composition.

The last service building component 52 of the first service composition receives 5152 the session object from the last but one service building component 51 and a notification of an event thrown by the last but one service building component 51. The last service building component 52 comprises a service routing table, however there is no entry with service routing rules in the service routing table. The last service building component 52 performs its functionality (one or more actions associated with the notified event) and throws a final event.

Triggered by the final event, the session object is destroyed and the service garbage collector 24 is invoked 5224. The service garbage collector 24 terminates all session-specific actions in the service building components 31, 41, 51, 52 associated with the invoked session of the first service. Thus, this session of the first service is terminated.

Fig. 2b shows an execution of a second service provided by the service control unit 2. The second service is defined by a second service description stored in the service description storage 23. The deployment manager 22 instantiates the second service by invoking a specific subset 31, 32, 41 of the service building components. The second service may be provided concurrently to the aforementioned first service.

The initial service building component 32 of the second service composition instantiating said second service receives a service identifier defining the second service to be provided and a notification of an event, thus initiating a new session of the second service. The initial service building component 32 creates a session object associated to the new session. The initial service building component 32 performs its functionality (one or more actions associated with the notified event) and throws one or more events. The initial service building component 32 comprises a service routing table with service routing rules specifying one or more service building components of the inter-linked service building components 31, 32, 41 to be invoked by the initial service building component 32 dependent on the service to be provided and dependent on an event.

The initial service building component 32 identifies the service routing rules corresponding to the received service identifier and the events according to its service routing table. The initial service building component 32 invokes 3231, as specified by the identified service routing rules, the service building component 31, representing a last but one service building component in the currently executed service composition, and in parallel invokes 3241, as specified by the identified service routing rules, the service building component 41, representing the last service building component in the currently executed service composition. Thus, the service building component 31 invokes two different successive service building components. It is possible that each of the invoked successive service building components receives a notification of an identical event or of different events.

The last but one service building component 31 of the service composition receives 3231 the session object from the initial service building component 32 and a notification of the event thrown by the initial service building component 32. The last but one service building component 31 performs its functionality (one or more actions associated with the notified event) and throws an event. The last but one service building component 31 comprises a service routing table with service routing rules specifying one or more service building components of the inter-linked service building components 31, 32, 41 to be invoked by the last but one service building component 31 dependent on the service to be provided and dependent on the notified event.

The last but one service building component 31 identifies the service routing rules corresponding to the received service identifier and the notified event according to its service routing table. The last but one service building component 31 invokes 3141, as specified by the identified service routing rules, the service building component 41, representing the last service building component in the currently executed service composition.

The last service building component 41 of the service composition receives 3241 the session object from the initial service building component 32 and a notification of an event thrown by the initial service building component 32. In parallel, the last service building component 41 of the service composition receives 3141 the session object from the last but one service building component 31 and a notification of an event thrown by the last but one service building component 31. The last service building component 41 comprises a service routing table, however there is no entry with service routing rules in the service routing table. The last service building component 41 performs its functionality (one or more actions associated with the notified events, both from the service building component 31 and the service building component 32) and throws a final event.

Triggered by the final event, the session object is destroyed and the service garbage collector 24 is invoked 4124. The service garbage collector 24 terminates all session-specific actions in the service building components 31, 32, 41 associated with the invoked session of the second service. Thus, this session of the second service is terminated.

## Claims

1. A method of providing a service by means of a service composition comprising two or more inter-linked service building components (1, 31, 32, 41, 51, 52) executed on a data processing platform,
the method comprising the steps of:
providing the two or more inter-linked service building components (1, 31, 32, 41, 51, 52) whereby at least one service building component of the two or more inter-linked service building components (1, 31, 32, 41, 51, 52) comprises a service routing table (13) with service routing rules specifying one or more service building components of the two or more inter-linked service building components (1, 31, 32, 41, 51, 52) to be invoked by the at least one service building component dependent on a service to be provided and/or dependent on an event;
receiving, by the at least one service building component, a service identifier defining the service to be provided and/or a notification of an event;
identifying, by the at least one service building component, the service routing rules corresponding to the received service identifier and/or the notified event according to the service routing table (13); and
invoking, by the at least one service building component, the one or more service building components specified by the identified service routing rules.

2. The method of claim 1,
**characterised in**
**that** the method further comprises the step of:
creating, by a service creator (21), a service description describing said service, the service description defining a service composition identifier identifying the service composition, the two or more inter-linked service building components (1, 31, 32, 41, 51, 52) of the service composition, and event-action links (3141, 3231, 3231, 4151, 5152) between said two or more service building components (1, 31, 32, 41, 51, 52).

3. The method of claim 2,
**characterised in**
**that** the service description further defines one or more first events initially appearing in the service composition and one or more last events finally thrown by the service composition.

4. The method of claim 2 or 3,
**characterised in**
**that** the method further comprises the step of:
storing said service description in a service repository (23) which allows later modification of the service description.

5. The method of claim 2,
**characterised in**
**that** the method further comprises the step of:
deploying, by a deployment manager (22), said service on the data processing platform by instantiating the two or more inter-linked service building components according to said service description, whereby said instantiation comprises the creation of the service routing table of the at least one service building component based on said service description.

6. The method of claim 2,
**characterised in**
**that** the method further comprises the steps of:
exposing, for at least one of said service building components (1, 31, 32, 41, 51, 52), a functionality of the at least one service building component through a unique service building component description specifying one or more actions that can be triggered by the at least one service building component, one or more events associated with the at least one service building component, and one or more parameters that are used for said one or more actions and/or said one or more events; and
composing, by the service creator (21), the two or more inter-linked service building components (1, 31, 32, 41, 51, 52) of the service composition by taking into account said exposed functionality.

7. The method of claim 1,
**characterised in**
**that** the method further comprises the steps of:
invoking a first service building component (31, 32) of said service composition by an initial event;
invoking, by the first service building component (31, 32), one or more successive service building components (31, 41, 51) of the service composition according to the service routing rules stored in the service routing table of the first service building component (31, 32);
invoking, by a last but one service building component (31, 32, 51) of said service composition, a last service building component (41, 52) of said service composition; and
triggering by the last service building component (41, 52) a final event.

8. The method of claim 1,
**characterised in**
**that** the method further comprises the steps of:
upon invocation of a session of the service, generating a session object assigned to the session, said session object comprising a service composition identifier for identifying said service composition; transmitting said session object between the two or more inter-linked service building components (1, 31, 32, 41, 51, 52); and
triggered by a final event, destroying the session object and invoking a service garbage collector (24) for terminating all session-specific actions in the service building components associated with the invoked session of the service.

9. The method of claim 8,
**characterised in**
**that** the method further comprises the steps of:
copying, by a preceding service building component of the two or more inter-linked service building components (1, 31, 32, 41, 51, 52), internal state information associated with the preceding service building component to the session object; and
transmitting said internal state information together with the session object to a successive service building component of the two or more service building components (1, 31, 32, 41, 51, 52) invoked by the preceding service building component.

10. A service control unit (2) for supporting the execution of two or more services on a data processing platform, the service control unit (2) comprising two or more inter-linked service building components (1, 31, 32, 41, 51, 52) associated with two or more service compositions whereby at least one of the service building components (1, 31, 32, 41, 51, 52) comprises a service routing table (13) with service routing rules specifying one or more service building components of the two or more inter-linked service building components (1, 31, 32, 41, 51, 52) to be invoked by the at least one service building component dependent on the service of the two or more services to be provided and/or dependent on an event, and adapted to receive a service identifier defining the service to be provided and/or a notification of an event, identify the service routing rules corresponding to the received service identifier and/or the notified event according to the service routing table (13), and invoke the one or more service building components specified by the identified service routing rules.

## Amended claims

### Amended claims in accordance with Rule 137(2) EPC.

**1.** A method of providing a service by means of a service composition comprising two or more inter-linked service building components (1, 31, 32, 41, 51, 52) executed on a data processing platform,
the method comprising the steps of:
providing the two or more inter-linked service building components (1, 31, 32, 41, 51, 52) whereby at least one service building component of the two or more inter-linked service building components (1, 31, 32, 41, 51, 52) comprises a service routing table (13) with service routing rules specifying one or more service building components of the two or more inter-linked service building components (1, 31, 32, 41, 51, 52) to be invoked by the at least one service building component dependent on a service to be provided and/or dependent on an event;
receiving, by the at least one service building component, a service identifier defining the service to be provided and/or a notification of an event;
identifying, by the at least one service building component, the service routing rules corresponding to the received service identifier and/or the notified event according to the service routing table (13);
invoking, by the at least one service building component, the one or more service building components specified by the identified service routing rules;
upon invocation of a session of the service, generating a session object assigned to the session, said session object comprising a service composition identifier for identifying said service composition; transmitting said session object between the two or more inter-linked service building components (1, 31, 32, 41, 51, 52);
copying, by a preceding service building component of the two or more inter-linked service building components (1, 31, 32, 41, 51, 52), internal state information associated with the preceding service building component to the session object;
transmitting said internal state information together with the session object to a successive service building component of the two or more service building components (1, 31, 32, 41, 51, 52) invoked by the preceding service building component; and
triggered by a final event, destroying the session object and invoking a service garbage collector (24) for terminating all session-specific actions in the service building components associated with the invoked session of the service.

**2.** The method of claim 1,
**characterised in**
**that** the method further comprises the step of:
creating, by a service creator (21), a service description describing said service, the service description defining a service composition identifier identifying the service composition, the two or more inter-linked service building components (1, 31, 32, 41, 51, 52) of the service composition, and event-action links (3141, 3231, 3231, 4151, 5152) between said two or more service building components (1, 31, 32, 41, 51, 52).

**3.** The method of claim 2,
**characterised in**
**that** the service description further defines one or more first events initially appearing in the service composition and one or more last events finally thrown by the service composition.

**4.** The method of claim 2 or 3,
**characterised in**
**that** the method further comprises the step of:
storing said service description in a service repository (23) which allows later modification of the service description.

**5.** The method of claim 2,
**characterised in**
**that** the method further comprises the step of:
deploying, by a deployment manager (22), said service on the data processing platform by instantiating the two or more inter-linked service building components according to said service description, whereby said instantiation comprises the creation of the service routing table of the at least one service building component based on said service description.

**6.** The method of claim 2,
**characterised in**
**that** the method further comprises the steps of:
exposing, for at least one of said service building components (1, 31, 32, 41, 51, 52), a functionality of the at least one service building component through a unique service building component description specifying one or more actions that can be triggered by the at least one service building component, one or more events associated with the at least one service building component, and one or more parameters that are used for said one or more actions and/or said one or more events; and
composing, by the service creator (21), the two or more inter-linked service building components (1, 31, 32, 41, 51, 52) of the service composition by taking into account said exposed functionality.

**7.** The method of claim 1,
**characterised in**
**that** the method further comprises the steps of:
invoking a first service building component (31, 32) of said service composition by an initial event;
invoking, by the first service building component (31, 32), one or more successive service building components (31, 41, 51) of the service composition according to the service routing rules stored in the service routing table of the first service building component (31, 32);
invoking, by a last but one service building component (31, 32, 51) of said service composition, a last service building component (41, 52) of said service composition; and
triggering by the last service building component (41, 52) a final event.

**8.** A service control unit (2) for supporting the execution of two or more services on a data processing platform, the service control unit (2) comprising two or more inter-linked service building components (1, 31, 32, 41, 51, 52) associated with two or more service compositions whereby at least one of the service building components (1, 31, 32, 41, 51, 52) comprises a service routing table (13) with service routing rules specifying one or more service building components of the two or more inter-linked service building components (1, 31, 32, 41, 51, 52) to be invoked by the at least one service building component dependent on the service of the two or more services to be provided and/or dependent on an event, and adapted to receive a service identifier defining the service to be provided and/or a notification of an event, identify the service routing rules corresponding to the received service identifier and/or the notified event according to the service routing table (13), invoke the one or more service building components specified by the identified service routing rules, generate, upon invocation of a session of the service, a session object assigned to the session, said session object comprising a service composition identifier for identifying said service composition, transmit said session object between the two or more inter-linked service building components (1, 31, 32, 41, 51, 52), copy internal state information associated with a preceding service building component of the two or more inter-linked service building components (1, 31, 32, 41, 51, 52) to the session object, transmit said internal state information together with the session object to a successive service building component of the two or more service building components (1, 31, 32, 41, 51, 52) invoked by the preceding service building component, and, triggered by a final event, destroy the session object and invoke a service garbage collector (24) for terminating all session-specific actions in the service building components associated with the invoked session of the service.
